# EUROPÄISCHE PATENTSCHRIFT

(11) **EP 1 734 286 B1**
(45) Veröffentlichungstag und Bekanntmachung des Hinweises auf die Patenterteilung: **26.08.2009**
(21) Anmeldenummer: 06121775.8
(22) Anmeldetag: 03.11.2005
(51) Int. Cl.: F16H 47/04

(54) **Leistungsverzweigtes hydromechanisches Getriebe mit Summiergetriebemittel**
Power-splitting hydromechanical transmission with superimposing transmission means
Transmission hydromécanique à division de puissance comportant des moyens de transmission sommateurs

(30) Priorität: 04.11.2004 DE 102004053254
(43) Veröffentlichungstag der Anmeldung: 20.12.2006
(62) Teilanmeldung aus: 05110321.6
(73) Patentinhaber: LOHMANN & STOLTERFOHT GMBH, 58455 Witten (DE)
(72) Erfinder: Meise, Andreas, 44795, Bochum (DE); Langenbeck, Bernhard, 44267, Dortmund (DE); Nagel, Frank, 89073, Ulm (DE); Reiblein, Steffen, 76707, Hambrücken (DE)
(74) Vertreter: Kietzmann, Lutz

(56) Entgegenhaltungen:
- FR-A- 2 238 873
- FR-A- 2 399 588
- JP-A- 5 215 200
- US-A- 3 396 607
- US-A- 3 969 957
- US-A1- 2002 082 130

## Beschreibung

Die vorliegende Erfindung betrifft eine Getriebeanordnung, insbesondere für einen Antrieb eines Fahrzeuges, mit einem hydrostatischen Getriebe, dem mindestens eine Planetenstufe nachgeschaltet ist, wobei die Ankopplung der Planetenstufe an das hydrostatische Getriebe über zwischengeschaltete Getriebemittel zur Drehzahlüberlagerung innerhalb der Planetenstufe erfolgt.

Das Einsatzgebiet derartiger Getriebeanordnungen erstreckt sich vornehmlich auf Fahrzeuge, insbesondere Erdbearbeitungsfahrzeuge und dergleichen. Die spezielle Getriebeanordnung dient als kontinuierlich variables Getriebe zum Antrieb solcher Fahrzeuge.

Aus dem allgemeinen Stand der Technik gehen gattungsgemäße Getriebeanordnungen hervor, bei denen die mechanische Leistungsübertragung mit einem stufenlos verstellbaren hydrostatischen Getriebe kombiniert wird. Zweck dieser Getriebeanordnung ist es, den Wandlungsbereich eines hydrostatischen Fahrantriebs zu vergrößern und ein Schalten ohne Zugkraftunterbrechung zu ermöglichen. Typischerweise liefert ein hydrostatisches Getriebe, das aus einer Hydraulikpumpe mit variabler Drehzahl und einem nachgeschalteten Hydraulikmotor besteht, eine kontinuierlich variable Ausgangsdrehzahl an die Räder oder Raupen des Fahrzeuges. Insbesondere kann die Drehzahl kontinuierlich durch Steuerung der Verdrängung der verstellbaren Hydraulikpumpe variiert werden. Um nun einen weiten Fahrbereich abzudecken, wird das Motordrehmoment zwischen dem hydrostatischen Getriebe LD 40102 / LK:hv
und einem hiermit gekoppelten mechanischen Getriebe aufgeteilt. Das mechanische Getriebe, in Form mindestens einer Planetengetriebestufe, hat eine Anzahl von Getriebebereichen entsprechend den unterschiedlichen Betriebsdrehzahlen des Radantriebs. Die Kombination des hydrostatischen Getriebes mit dem mechanischen Getriebe ermöglicht es, ein kontinuierlich variables Getriebe bereitzustellen, das über einen weiteren Bereich von Drehzahlen arbeitet, als es unter Verwendung eines hydrostatischen Getriebes alleine möglich ist.

Aus der DE 101 44 943 A1 geht eine derartige Getriebeanordnung hervor. Die Getriebeanordnung umfasst ein hydrostatisches Getriebe, das mit einem mechanischen Getriebe gekoppelt ist, um einen ersten Fahrbereich und einen zweiten Fahrbereich auszuwählen. Eine Steuervorrichtung führt einen Schaltvorgang vom hierfür vorgesehenen ersten Getriebebereich zu dem zweiten Getriebebereich aus. Dieser Stand der Technik löst das Problem im Fahrbereich um den Stillstand des Fahrzeuges herum die gesamte Antriebsleistung nicht leistungsverzweigt zu wandeln, so dass ein Reversieren des Fahrzeuges rein hydrostatisch ohne Schaltung einer Kupplung im Stillstand erfolgen kann, und dass in diesem Fahrbereich, in welchem für die Fahrzeuge meist der Hauptarbeitsbereich liegt, keine Blindleistung im Hydraulikkreislauf auftritt. Eine Schaltung der Kupplungen soll nur beim Wechsel der Fahrbereiche und dann bei gleichen Drehzahlen der zu verbindenden Teile stattfinden.

Ein Nachteil dieses Standes der Technik besteht jedoch darin, dass das vorstehend dargelegte Ergebnis nur mit einem erheblichen bauteiletechnischen Aufwand umgesetzt wird. So sind eine Vielzahl von einzelnen Kupplungen innerhalb des Getriebes erforderlich, welche koordiniert durch eine zentrale elektronische Steuervorrichtung anzusteuern sind.

Aus der US 2002/082130A1, die alle Merkmale des Oberbegriffes des unabhängigen Anspruchs 1 offenbart, ist des Weiteren eine Getriebeanordnung für ein Fahrzeug bekannt, bei welchem die Leistung eines hydrostatischen Zweiges mit der Leistung eines mechanischen Zweiges, welcher aus einem Planetenradgetriebe besteht, überlagert wird. Hierbei kann je nach Ausführung eine Kopplung des hydrostatischen Getriebeteils entweder mit einem Sonnenrad oder einem Hohlrad des Planetengetriebes erfolgen, während die Planetenräder mittels eines Steges mit dem Abtrieb verbunden sind. Zum Darstellen zweier Fahrbereiche kann das Sonnenrad bzw. das Hohlrad des Weiteren entweder mit dem Gehäuse oder direkt mit dem Antrieb des hydrostatischen Getriebezweiges über eine Kupplung verbunden werden.

Nachteilhaft an einer derartigen Ausführung ist, dass der Fahrbereich eingeschränkt ist, da die Fahrgeschwindigkeiten der beiden Fahrbereiche nicht optimal ineinander übergehen.

Es ist daher die Aufgabe der vorliegenden Erfindung, eine Getriebeanordnung der vorstehend beschriebenen Art dahingehend weiter zu verbessern, dass ein breiter Fahrbereich der Getriebeanordnung unter Einsatz eines minimalen Bauteileaufwands möglich wird.

Die Aufgabe wird ausgehend von einer Getriebeanordnung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass eine Bremse über eine erste Planetenstufe mit einem Hohlrad einer zweiten Planetenstufe in Wirkverbindung steht, um in einem ersten Fahrbereich einen Planetensteg der ersten Planetenstufe zu fixieren, so dass das Hohlrad der zweiten Planetenstufe über das hydrostatische Getriebe angetrieben wird, und dass ferner entsprechend eines zweiten Fahrbereiches das Sonnenrad der zweiten Planetenstufe über eine Kupplung mit einer Getriebeantriebswelle der Getriebeanordnung in Wirkverbindung steht, so dass sich die Drehzahlen von Hohlrad und Sonnenrad der zweiten Planetenstufe überlagern.

Der Vorteil der erfindungsgemäßen Getriebeanordnung besteht insbesondere darin, dass hiermit ein hohes Übersetzungsverhältnis durch Wechsel der Betriebsweise über die Bremse und die Kupplung möglich ist, wodurch zwei sich einander ergänzende Fahrbereiche für die Vorwärtsfahrt eines Fahrzeuges zur Verfügung gestellt werden. Im ersten Fahrbereich wird der Planetensteg der ersten Planetenstufe über die Bremse fixiert. Der Antrieb erfolgt dabei ausgehend von der Getriebeeingangswelle über das hydrostatische Getriebe in die zweite Planetenstufe, deren Planetensteg den Abtrieb bildet. Im zweiten Fahrbereich erfolgt der Antrieb leistungsverzweigt zum Einen direkt mechanisch über die Kupplung auf das Sonnenrad der zweiten Planetenstufe und zum Anderen auch über das hydrostatische Getriebe auf das Hohlrad der zweiten Planetenstufe. Der Abtrieb erfolgt weiterhin über den Planetensteg. Die Bremse ist in diesem Fall geöffnet.

Vorteilhafterweise erfolgt die Umschaltung zwischen dem ersten Fahrbereich und dem zweiten Fahrbereich durch ein wechselseitiges Betätigen der Bremse und der Kupplung über eine zentrale Steuereinheit, welche zugleich auch das hydrostatische Getriebe nach Maßgabe des Fahrwunsches ansteuert.

Die erfindungsgemäße Getriebeanordnung kann zum Zwecke einer Drehzahlanpassung verschiedene Getriebestufen enthalten. So treibt die Getriebeeintriebswelle das hydrostatische Getriebe vorzugsweise über eine zwischengeschaltete Getriebestufe an. Des Weiteren kann die Kupplung über eine weitere Getriebestufe mit der Getriebeeintribswelle in Wirkverbindung stehen, also indirekt.

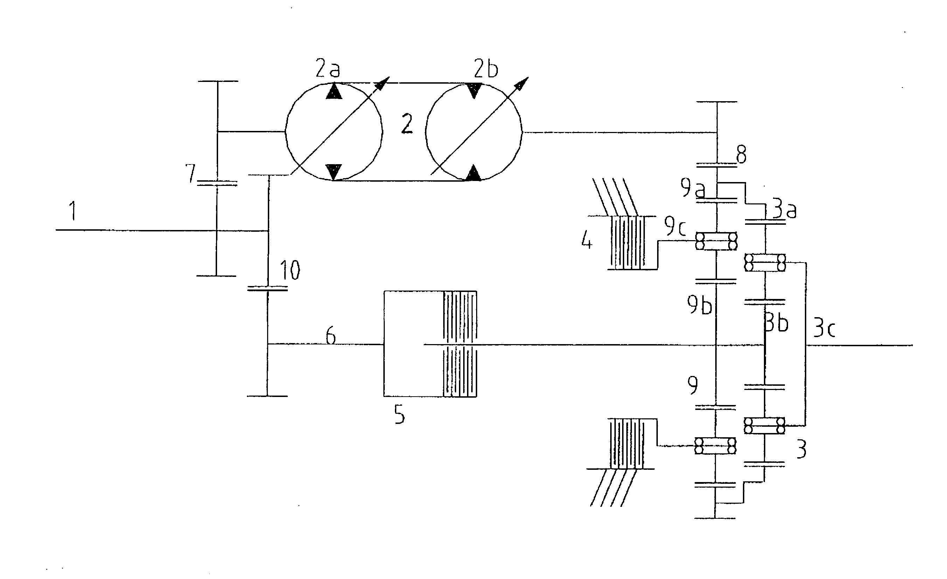

Weitere die Erfindung verbessernde Maßnahmen werden nachstehend gemeinsam mit der Beschreibung eines bevorzugten Ausführungsbeispiels der Erfindung anhand der Figur näher dargestellt. Diese zeigt ein Schaltbild einer Getriebeanordnung mit Getriebemitteln zur Drehzahlüberlagerung in einer bevorzugten Ausführungsform.

Gemäß Figur besteht die Getriebeanordnung dem Kraftfluss folgend aus einer eingangsseitigen Getriebeeintriebswelle 1, welche durch einen - nicht weiter dargestellten - Motor angetrieben wird. Der Getriebeeintriebswelle 1 ist ein hydrostatisches Getriebe 2 nachgeschaltet. Das hydrostatische Getriebe 2 besteht aus einer verstellbaren Hydraulikpumpe 2a, die mit einem verstellbaren Hydraulikmotor 2b hydrostatisch gekoppelt ist. Ausgangsseitig des hydrostatischen Getriebes 2 ist eine erste Planetenstufe 9 angekoppelt. Entlang eines von der Getriebeeintriebswelle 1 über einer Getriebestufe 10 und einer fortführenden Welle 6 verlaufenden parallelen Kraftfluss sind eine Bremse 4 und eine Kupplung 5 vorgesehen.

Der Kraftfluss geht in einem ersten Fahrbereich von der Getriebeeintriebeswelle 1 über eine eingangsseitige Getriebestufe 7 auf die Antriebswelle der Verstellpumpe 2a des hydrostatischen Getriebes 2. Die Abtriebswelle des hydrostatischen Motors 2b des hydrostatischen Getriebes 2 steht über die nachgeschaltete Getriebestufe 8 und die erste Planetenstufe 9 in Wirkverbindung mit dem Hohlrad 3a der zweiten Planetenstufe 3 sowie auch mit der Bremse 4 des parallelen Kraftflusses.

Wird bei konstanter Antriebsdrehzahl die verstellbare Hydraulikpumpe 2a aus der Nullstellung auf größeres Fördervolumen ausgeschwenkt, erhöht sich proportional zu dem ansteigenden Fördervolumen auch die Drehzahl am Hydraulikmotor 2b und damit die Abtriebsdrehzahl des hydrostatischen Getriebes 2. Ein Verschwenken der Verstellpumpe 2a in die entgegengesetzte Richtung bedeutet eine andere Drehrichtung am Hydraulikmotor 2b und damit eine Rückwärtsfahrt des Fahrzeuges.

Die Übersetzungen der Getriebestufen 7, 8 und 10 sowie der Planetenstufen 3 und 9 sind derart aufeinander abgestimmt, dass bei maximaler Drehzahl des verstellbaren Hydraulikmotors 2b das Sonnenrad 3b und die Welle 6 des parallelen Kraftflusses die gleiche Drehzahl aufweist. In diesem Betriebspunkt wird mittels einer - hier nicht weiter dargestellten - Steuereinheit die Bremse 4 geöffnet und die Kupplung 5 geschlossen.

Weiterhin besitzt die als Stirnradgetriebe ausgebildete Getriebestufe 8 ein auf der Welle starr angeordnetes Stirnrad, das vom hydrostatischen Getriebe 2 angetrieben ist. Das besagte Stirnrad kämmt mit einem außenverzahnten Hohlrad 9a der ersten Planetenstufe 9. Die Bremse 4 dient dem Fixieren des Planetenstegs 9c von der ersten Planetenstufe 9. Die Sonnenräder 3b und 9b der Planetenstufen 3 bzw. 9 sind auf einer gemeinsamen Welle angeordnet, die mit der Kupplung 5 fixierbar ist. Die der ersten Planetenstufe 9 nachgeschaltete zweite Planetenstufe 3 wird über ein gemeinsames Hohlrad 9a und 3a angetrieben. Der Abtrieb bei der zweiten Planetenstufe 3 erfolgt über den Planetensteg 3c.

### Bezugszeichenliste

- **1**: Getriebeeintriebswelle
- **2**: hydrostatisches Getriebe
- **3**: zweite Planetenstufe
- **3a**: Hohlrad
- **3b**: Sonnenrad
- **3c**: Planetensteg
- **4**: Bremse
- **5**: Kupplung
- **6**: Welle
- **7**: Getriebestufe
- **8**: Getriebestufe
- **9**: erste Planetenstufe
- **9a**: Hohlrad
- **9b**: Sonnenrad
- **9c**: Planetensteg
- **10**: Getriebestufe

## Patentansprüche

1. Getriebeanordnung für einen Antrieb eines Fahrzeuges, mit einem hydrostatischen Getriebe (2), dem mindestens eine erste Planetenstufe (9) nachgeschaltet ist, wobei die Ankopplung der ersten Planetenstufe (9) an das hydrostatische Getriebe (2) über zwischengeschaltete Getriebemittel zur Drehzahlüberlagerung innerhalb der ersten Planetenstufe (9) erfolgt, so dass ein Hohlrad (9a) der ersten Planetenstufe (9) über eine Getriebestufe (8) mit dem hydrostatischen Getriebe (2) in Wirkverbindung steht, wobei die Getriebestufe (8) ein auf einer Welle starr angeordnetes Stirnrad besitzt, wobei die Welle vom hydrostatischen Getriebe (2) angetrieben ist, und wobei das Stirnrad mit dem außenverzahnten Hohlrad (9a) der ersten Planetenstufe (9) kämmt,
**dadurch gekennzeichnet, dass**
- eine Bremse (4) über die erste Planetenstufe (9) mit einem Hohlrad (3a) einer zweiten Planetenstufe (3) in Wirkverbindung steht, um in einem ersten Fahrbereich einen Planetensteg (9c) der ersten Planetenstufe (9) zu fixieren, so dass das Hohlrad (3a) der zweiten Planetenstufe (3) über das hydrostatische Getriebe (2) angetrieben ist,
- entsprechend eines zweiten Fahrbereichs ein Sonnenrad (3b) der zweiten Planetenstufe (3) über eine Kupplung (5) mit einer Getriebeeintriebswelle (1) der Getriebeanordnung in Wirkverbindung steht, so dass sich infolge Leistungsverzweigung die Drehzahlen von Hohlrad (3a) und Sonnenrad (3b) der zweiten Planetenstufe (3) überlagern.

2. Getriebeanordnung nach Anspruch 1,
**dadurch gekennzeichnet, dass** die Umschaltung zwischen dem ersten
Fahrbereich und dem zweiten Fahrbereich durch wechselseitiges Betätigen der Bremse (4) und der Kupplung (5) über eine zentrale Steuereinheit erfolgt, welche zugleich auch das hydrostatische Getriebe (2) nach Maßgabe des Fahrwunsches ansteuert.

3. Getriebeanordnung nach Anspruch 1,
**dadurch gekennzeichnet, dass** die Getriebeeintriebswelle (1) über eine Getriebestufe (7) das hydrostatische Getriebe (2) antreibt.

4. Getriebeanordnung nach Anspruch 1,
**dadurch gekennzeichnet, dass** die Kupplung (5) über eine Getriebestufe (10) mit der Getriebeeintriebswelle (1) in Wirkverbindung steht.

5. Getriebeanordnung nach Anspruch 1,
**dadurch gekennzeichnet, dass** das hydrostatische Getriebe (2) aus einer verstellbaren Hydraulikpumpe (2a) besteht, die mit einem verstellbaren Hydraulikmotor (2b) hydrostatisch gekoppelt ist.

## Claims

1. A transmission arrangement for driving a vehicle, comprising a hydrostatic transmission (2) having at least one first planetary stage (9) connected downstream of it, wherein the coupling of the first planetary stage (9) to the hydrostatic transmission (2) is realised via interposed transmission means for speed overlap within the first planetary stage (9), so that a hollow gear (9a) of the first planetary stage (9) is in effective connection with the hydrostatic transmission (2) via a transmission stage (8), wherein the transmission stage (8) has a spur gear rigidly arranged on a shaft, wherein the shaft is driven by the hydrostatic transmission (2) and wherein the spur gear is in mesh with the externally toothed hollow gear (9a) of the first planetary stage (9),
**characterised in that**
- a brake (4) is in effective connection with a hollow gear (3) of a second planetary stage (3) via the first planetary stage (9) in order to fix a planet carrier (9c) of the first planetary stage (9) in a first gear range, so that the hollow gear (3a) of the second planetary stage (3) is driven via the hydrostatic transmission (2),
- to realise a second gear range, a sun gear (3b) of the second planetary stage (3) is in effective connection with a transmission drive shaft (1) of the transmission arrangement via a clutch (5), so that the speeds of the hollow gear (3a) and the sun gear (3b) of the second planetary stage (3) overlap due to power distribution.

2. A transmission arrangement according to claim 1,
**characterised in that** switching between the first gear range and the second gear range is carried out by alternately operating the brake (4) and the clutch (5) by a central control unit which also controls the hydrostatic transmission (2) depending on the desired driving.

3. A transmission arrangement according to claim 1,
**characterised in that** the transmission drive shaft (1) drives the hydrostatic transmission (2) via a transmission stage (7).

4. A transmission arrangement according to claim 1,
**characterised in that** the clutch (5) is in effective connection with the transmission drive shaft (1) via a transmission stage (10).

5. A transmission arrangement according to claim 1,
**characterised in that** the hydrostatic transmission (2) consists of an adjustable hydraulic pump (2a) hydrostatically coupled with an adjustable hydraulic motor (2b).

## Revendications

1. Système de transmission pour un entraînement d'un véhicule automobile, comprenant une transmission hydrostatique (2), laquelle est suivie d'au moins un premier étage planétaire (9), tel que l'accouplement du premier étage planétaire (9) à la transmission hydrostatique (2) a lieu via des organes de transmission interposés pour la superposition d'une vitesse de rotation à l'intérieur du premier étage planétaire (9), de sorte qu'une couronne intérieure (9a) du premier étage planétaire (9) est en coopération active via un étage de transmission (8) avec la transmission hydrostatique (2), ledit étage de transmission (8) possédant un engrenage droit agencé rigidement sur un arbre, ledit arbre est entraîné par la transmission hydrostatique (2), et l'engrenage droit engrène avec la couronne intérieure (9a) à denture extérieure du premier étage planétaire,
**caractérisé en ce que**
- un frein (4) est en coopération active via le premier étage planétaire (9) avec une couronne intérieure (3a) d'un second étage planétaire (3) afin de fixer, dans une première plage de fonctionnement, un porte-planétaire (9c) du premier étage planétaire (9), de sorte que la couronne intérieure (3a) du second étage planétaire (3) est entraînée via la transmission hydrostatique (2),
- une roue solaire (3b) du second étage planétaire (3) est en coopération active, en correspondance d'une seconde plage de fonctionnement, via un accouplement (5) avec un arbre d'entrée (1) du système de transmission de telle façon que, en raison d'une dérivation de puissance, les vitesses de rotation de la couronne intérieure (3a) et de la roue solaire (3b) du second étage planétaire (3) se superposent.

2. Système de transmission selon la revendication 1,
**caractérisé en ce que** la commutation entre la première plage de fonctionnement et la seconde plage de fonctionnement a lieu par actionnement alterné du frein (4) et de l'accouplement (5) via une unité de commande centrale, laquelle pilote simultanément également la transmission hydrostatique (2) en fonction des désirs du conducteur.

3. Système de transmission selon la revendication 1,
**caractérisé en ce que** l'arbre d'entrée de transmission (1) entraîne la transmission hydrostatique (2) via un étage de transmission (7).

4. Système de transmission selon la revendication 1,
**caractérisé en ce que** l'accouplement (5) est en liaison active, via un étage de transmission (10), avec l'arbre d'entrée de transmission (1).

5. Système de transmission selon la revendication 1,
**caractérisé en ce que** la transmission hydrostatique (2) comprend une pompe hydraulique réglable (2a), qui est couplée par voie hydrostatique avec un moteur hydraulique réglable (2b).
